# EUROPÄISCHE PATENTSCHRIFT

(11) **EP 2 263 772 B1**
(45) Veröffentlichungstag und Bekanntmachung des Hinweises auf die Patenterteilung: **13.03.2013**
(21) Anmeldenummer: 10162263.7
(22) Anmeldetag: 07.05.2010
(51) Int. Cl.: B01D 35/153

(54) **Filtereinrichtung**
Filter device
Dispositif de filtre

(30) Priorität: 28.05.2009 DE 102009023028
(43) Veröffentlichungstag der Anmeldung: 22.12.2010
(73) Patentinhaber: Mahle International GmbH, 70376 Stuttgart (DE)
(72) Erfinder: Kiemlen, Ralf, 72760, Reutlingen (DE); Schützle, Roland, 70469 Stuttgart (DE); Stange, Frank, 73207, Plochingen (DE)
(74) Vertreter: BRP Renaud & Partner

(56) Entgegenhaltungen:
- WO-A1-02/36940
- WO-A1-03/078025
- DE-A1- 19 702 612
- DE-U1-202006 007 194
- US-B1- 6 572 768

## Beschreibung

Die vorliegende Erfindung betrifft eine Filtereinrichtung zum Filtern einer Flüssigkeit einer Brennkraftmaschine, insbesondere in einem Kraftfahrzeug, mit den Merkmalen des Oberbegriffs des Anspruchs 1.

Aus der EP 1 229 985 B1 ist eine derartige Filtereinrichtung bekannt, bei der es sich bevorzugt um einen Ölfilter zum Reinigen von Schmieröl, insbesondere für Verbrennungsmotoren von Kraftfahrzeugen, handelt. Die bekannte Filtereinrichtung weist ein Filtergehäuse zur Aufnahme eines Filterelements auf, wobei das Filtergehäuse einen rohseitigen Zulauf und einen reinseitigen Ablauf aufweist. Das Filterelement trennt im eingesetzten Zustand einen mit dem Zulauf kommunizierenden Rohraum von einem mit dem Ablauf kommunizierenden Reinraum. Ferner weist das Filtergehäuse der bekannten Filtereinrichtung einen mit dem Rohraum kommunizierenden Leerlauf auf, der für einen am Filterelement ausgebildeten, axial und exzentrisch abstehenden Zapfen eine Zapfenaufnahme bildet, in die der Zapfen im eingesetzten Zustand des Filterelements eingesteckt ist. Der Zapfen verschließt somit den Leerlauf, wenn das Filterelement ordnungsgemäß in das Filtergehäuse eingesetzt ist.

Aus der US 6,572,768 B1 ist eine Filtereinrichtung zum Filtern einer Flüssigkeit einer Brennkraftmaschine bekannt mit einem in einem Filtergehäuse aufgenommen Filterelement, wobei das Filterelement einen axial und exzentrisch abstehenden Zapfen aufweist, der im eingesteckten Zustand in eine Zapfaufnahme in einem Leerlaufkanal eingesteckt ist. Im Bereich der Zapfenaufnahme ist dabei eine Ventileinrichtung vorgesehen, die bei vorhandenem Filterelement durch den Zapfen in einen Schließzustand gedrückt ist und den Leerlaufkanal verschließt.

Die vorliegende Erfindung beschäftigt sich mit dem Problem, für eine Filtereinrichtung der eingangs genannten Art, eine verbesserte oder zumindest alternative Ausführungsform anzugeben, die sich dadurch auszeichnet, dass insbesondere der Rohflüssigkeitsspiegel abgesenkt werden kann und das Filterelement relativ einfach aufgebaut sein kann.

Dieses Problem wird erfindungsgemäß durch den Gegenstände des unabhängigen Anspruchs 1. Vorteilhafte Ausführungsformen sind Gegenstand der abhängigen Ansprüche.

Die vorliegende Erfindung beruht auf dem allgemeinen Gedanken, einen axial und exzentrisch von einem Filterelement, insbesondere von einer Endscheibe eines derartigen Filterelements, abstehenden Zapfen lediglich zur Betätigung einer Ventileinrichtung zu benutzen und ihm selbst keinerlei zusätzliche Funktion mehr, wie bspw. eine Dichtfunktion, zuzuweisen. Die erfindungsgemäße Filtereinrichtung zum Filtern einer Flüssigkeit einer Brennkraftmaschine, insbesondere in einem Kraftfahrzeug, weist daher üblicherweise ein Filtergehäuse zur Aufnahme des Filterelements auf, wobei der von diesem axial und exzentrisch abstehende Zapfen in eingesetztem Zustand in eine Zapfenaufnahme in einem Leerlaufkanal eingesteckt ist. Im Bereich dieser Zapfenaufnahme ist erfindungsgemäß eine Ventileinrichtung vorgesehen, die bei vorhandenem Filterelement durch den Zapfen desselben in einen Schließzustand gedrückt ist und dadurch den Leerlaufkanal verschließt. Im Unterschied zu einer gattungsgemäßen Filtereinrichtung, bei welcher der Zapfen bspw. zusätzlich eine O-Ringdichtung aufweist und über diese den Leerlaufkanal verschließt, kann bei der erfindungsgemäßen Filtereinrichtung ein vergleichsweise einfach und dadurch kostengünstig gestalteter Zapfen verwendet werden, da dieser nunmehr keinerlei Dichtfunktion aufweisen muss, sondern lediglich dazu dient, in eingesetztem Zustand die Ventileinrichtung in deren Schließzustand vorzuspannen. Aus diesem Grunde muss auch die Maßhaltigkeit des exzentrisch von der Endscheibe des Filterelementes abstehenden Zapfens deutlich geringer sein, wodurch höhere Herstellungstoleranzen akzeptierbar sind.

Bei einer weiteren vorteilhaften Ausführungsform der erfindungsgemäßen Lösung, weist die Ventileinrichtung einen Schiebekolben, Federelemente und einen Ventilkolben auf, wobei ein erstes Federelement zwischen dem Ventilkolben und dem Schiebekolben und ein zweites Federelement zwischen dem Ventilkolben und dem Funktionselement angeordnet ist. Das zweite Federelement spannt somit den Ventilkolben in seine Öffnungsstellung vor, wogegen das erste Federelement den Ventilkolben bei eingesetztem Filterelement in seine Schließstellung drückt. Insgesamt kann somit der Schiebekolben als Ausgleichselement angesehen werden, da dieser zwar bei eingebautem Filterelement in direktem Kontakt mit dem Zapfen steht, über das zwischen dem Schiebekolben und dem Ventilkolben angeordnete erste Federelement jedoch Fertigungstoleranzen kompensieren kann, sodass mit der erfindungsgemäß aufgebauten Ventileinrichtung ebenfalls Herstellungstoleranzen bzgl. des filterelementseitigen Zapfens kompensierbar sind. Insbesondere kann mit der erfindungsgemäßen Filtereinrichtung die am Filterelement vorgesehene Zapfenkonstruktion deutlich einfacher aufgebaut werden, wodurch das turnusmäßig zu wechselnde Filterelement kostengünstiger angeboten werden kann. Der Funktionsträger und das darin enthaltene Ventil müssen über die gesamte Lebensdauer nicht ausgetauscht werden, lediglich das einfach zu handhabende Filterelement. Auch kann die am Funktionsträger vorgesehene Rampe einfacher ausgebildet werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung,
- Fig. 2: eine Darstellung wie in Fig. 1, jedoch im Bereich einer Ventileinrichtung.

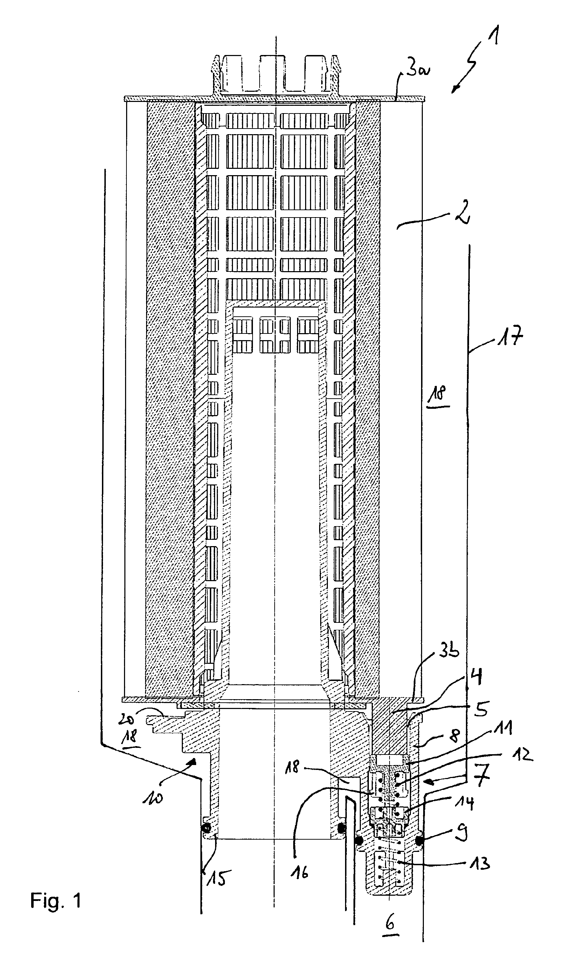

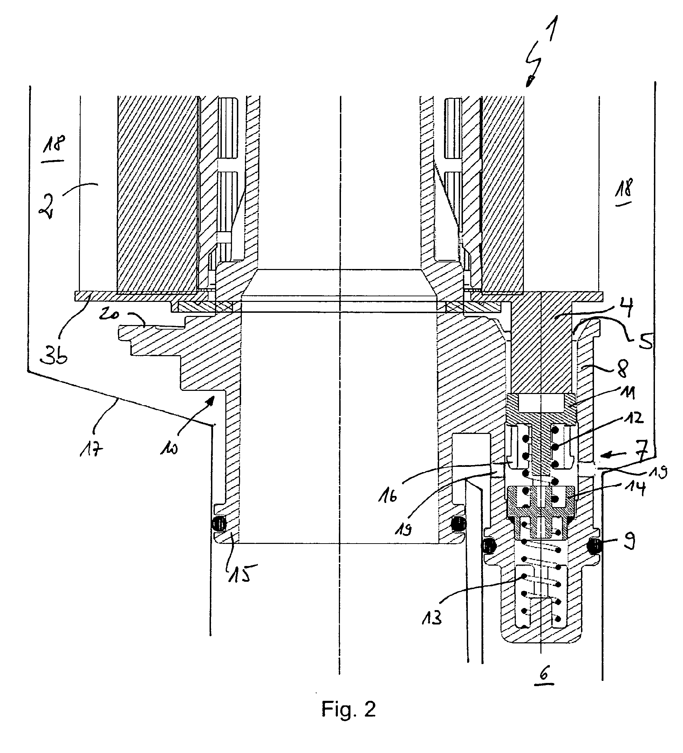

Entsprechend den Fig. 1 und 2, weist eine erfindungsgemäße Filtereinrichtung 1 zum Filtern einer Flüssigkeit einer Brennkraftmaschine, insbesondere in einem Kraftfahrzeug ein lediglich schematisch dargestelltes Filtergehäuse 17 zur Aufnahme eines Filterelements 2 auf. Das Filterelement 2 kann dabei in gewohnter Weise als Ringfilterelement ausgebildet und eine obere Endscheibe 3a sowie eine untere Endscheibe 3b aufweisen. Im Bereich der unteren Endscheibe 3b weist das Filterelement 2 einen axial und exzentrisch abstehenden Zapfen 4 auf, der im eingesetzten Zustand in eine Zapfenaufnahme 5 in einem lediglich angedeuteten Leerlaufkanal 6 eingesteckt ist. Der Leerlaufkanal 6 kommuniziert dabei üblicherweise mit einer Rohseite 18 der Filtereinrichtung 1, sodass bei einem Entfernen des Filterelements 2 die rohseitige, d. h. die ungereinigte, Flüssigkeit, über Fenster 19, die sich im Funktionselement 10 auf Höhe der Ventileinrichtung 7 befinden, in den Leerlaufkanal 6 ablaufen kann. Erfindungsgemäß wird durch die Fenster 19 im Funktionselement 10 der Spiegel der rohseitigen Flüssigkeit abgesenkt, so dass rohseitige Flüssigkeit im Filtergehäuse 17 verbleibt, wenn das Filterelement 2 gewechselt wird. Es ist nun im Bereich der Zapfenaufnahme 5 eine Ventileinrichtung 7 vorgesehen, die bei vorhandenem Filterelement 2 durch deren Zapfen 4 in einem Schließzustand gedrückt ist und in diesem den Leerlaufkanal 6 verschließt. Dabei übt der Zapfen 4 des Filterelements 2 in eingesetztem Zustand lediglich eine Druckkraft auf die Ventileinrichtung 7 aus und kann daher konstruktiv deutlich einfacher und kostengünstiger ausgebildet sein. Durch die Verlegung der Dichtfunktion vom Zapfen 4 auf das Ventil ist die Abdichtung des Leerlaufkanals 6 über die gesamte Lebensdauer gewährleistet.

Ein Vorteil ist, dass der Zapfen 4 konstruktiv einfach und stabil ausgeführt werden kann. Dies ist insbesondere bei der Anwendung des erfindungsgemäßen Filterelementes 2 bei Nutzfahrzeugen von Vorteil, da mit zunehmender Filterelementgröße auch die Belastung des Zapfens 4 beim Einbau, bzw. beim Filterelementwechsel zunimmt. Das Funktionselement 10 und die darin enthaltene Ventileinrichtung 7 müssen über die gesamte Lebensdauer nicht ausgetauscht werden, lediglich das einfach zu handhabende Filterelement 2. Auch kann die am Funktionselement 10 vorgesehene im Schnitt gezeigte Rampe 20 einfacher ausgebildet werden. Das Funktionselement 10 weist eine zum Zapfen 4 passende Rampengeometrie auf. Je nach Form des untersten Abschnittes des Zapfens 4 kann die Rampe 20 so ausgebildet sein, dass die Stirnseite des Zapfens 4 gut auf der Rampe 20 gleitet. Bei der alternativen Ausführungsform muss die Rampe 20 so gestaltet sein, dass der am Zapfen 4 befestigte Schiebekolben 11 nicht gelockert oder losgelöst wird. Eventuell muss eine gleitfähige Beschichtung auf die Rampe aufgetragen werden. Auch sollte bei der Wahl der Kunststoffe für das Funktionselement 10, als auch für den Zapfen 4, bzw. den Schiebekolben 11 auf die Gleiteigenschaften geachtet werden.

Die Geometrie des Zapfens 4 selber muss den jeweiligen Gegebenheiten angepasst werden. Bei der Verwendung der erfindungsgemäßen Filtereinrichtung 1 die für Nutzfahrzeuge ausgelegt werden kann, muss man beachten, dass die Stabilität des Zapfens 4 mit zunehmender Filterelementgröße mitwachsen muss. Auch die Dicke der Endscheibe 3b an der der Zapfen 4 angeformt ist oder an der er befestigt ist, muss dem Gewicht des Filterelementes 2 angepasst werden, um zu vermeiden, dass beim Einbau eines neuen Filterelementes 2 der Zapfen 4 gelockert oder abgebrochen wird.

Wie insbesondere der Fig. 2 weiter zu entnehmen ist, sind die Zapfenaufnahme 5 und die Ventileinrichtung 7 Bestandteil eines Einsatzes 8. Dieser Einsatz 8 ist über eine O-Ringdichtung 9 flüssigkeitsdicht in den Leerlaufkanal 6 einsetzbar, wobei der Einsatz 8 zugleich Bestandteil eines Funktionselements 10 ist. Das Funktionselement 10 kann als komplette Einheit, d. h. zusammen mit dem Einsatz 8 und der darin integrierten Ventileinrichtung 7 in das Filtergehäuse der Filtereinrichtung 1 eingesetzt werden. Das Funktionselement 10 ist dauerhaft im Filtergehäuse 17 befestigt. Das Funktionselement 10 weist auch eine Rampe 20 auf, die dazu dient, den Zapfen 4 zur Zapfenaufnahme 5 beim Einbau des neuen Filterelementes 2 zu führen.

Betrachtet man die Ventileinrichtung 7 genauer, so kann man erkennen, dass diese einen Schiebekolben 11, zwei Federelemente 12 und 13 sowie einen Ventilkolben 14 umfasst. Das erste Federelement 12 ist dabei zwischen dem Ventilkolben 14 und dem Schiebekolben 11 angeordnet, während das zweite Federelement 13 zwischen dem Ventilkolben 14 und dem Einsatz 8 des Funktionselements 10 angeordnet ist. Bezüglich der Wirkungsweise der beiden Federelemente 12 und 13 ist zu erkennen, dass das zweite Federelement 13 den Ventilkolben 14 nach oben und damit in seine Öffnungsstellung vorspannt, wogegen das erste Federelement 12 den Ventilkolben 14 nach unten und damit bei eingesetztem Filterelement in seine Schließstellung drückt.

Alternativ kann der Zapfen 4 auch einen elektrischen Schaltkreis schließen, der dann ein elektrisch gesteuertes Leerlaufventil betätigt. Wobei das Leerlaufventil im Funktionselement 10 integriert sein kann. Eine andere Alternative kann sein, dass die Ventileinrichtung 7 anders als hier vorgeschlagen aufgebaut ist und z.B ohne den Toleranzausgleich auskommt. Oder dass ein herkömmlich verwendetes Ventil eingesetzt wird.

Gemäß den Fig. 1 und 2 ist dabei das Filterelement 2 in seinem eingebauten Zustand gezeigt, in welchem es mit seinem Zapfen 4 in Kontakt mit dem Schiebekolben 11 steht und diesen nach unten drückt. Über den nach unten gedrückten Schiebekolben 11 wird das erste Federelement 12 gespannt und der damit verbundene Ventilkolben 14 nach unten, d. h. in seine Schließstellung gegen einen Ventilsitz gedrückt. Bei entferntem Filterelement 2 befindet sich der Schiebekolben 11 in seiner oberen Ausgangsstellung, wodurch das erste Federelement 12 entspannt ist. In diesem Zustand drückt das zweite Federelement 13 den Ventilkolben 14 nach oben und hebt diesen von einem einsatzseitigen Ventilsitz ab. Erst durch den Einbau des Filterelements 2 wird über dessen Zapfen 4 der Schiebekolben 11 nach unten gedrückt und dadurch das erste Federelement 12 gespannt, woraufhin diese eine größere Federkraft auf den Ventilkolben 14 ausübt als das zweite Federelement 13 und somit den Ventilkolben 14 gegen den einsatzseitigen Ventilsitz presst.

Die Fenster 19 dienen bei allen erfindungsgemäßen Filtereinrichtungen 1 dazu, den Spiegel des Rohöls zusenken, so dass beim Filterelementwechsel der Rohraum 18 zumindest fast komplett leer läuft. Bei einer alternativen Ausführungsform ist selbstverständlich auch denkbar, dass der Schiebekolben 11 Bestandteil des Zapfens 4 ist. In diesem Fall wären andere Sicherungselemente 16, wie beispielsweise Rasthaken, erforderlich, die den Schiebekolben 11 mit dem Zapfen 4 geeignet verbinden.

Die erfindungsgemäße Filtereinrichtung 1 ist bspw. zum Filtern von Schmieröl oder zum Filtern von Kraftstoffen ausgestaltet und weist gegenüber herkömmlichen Filtereinrichtungen den großen Vorteil auf, dass der Zapfen 4 am Filterelement 2 lediglich eine Druckkraft auf die Ventileinrichtung 7 ausüben muss, ansonsten aber keinerlei Funktionen, insbesondere keine Dichtfunktionen, erfüllen muss. Dies ermöglicht es, den Zapfen 4 und damit das gesamte Filterelement 2 konstruktiv einfacher und gleichzeitig kostengünstiger herzustellen. Durch die erfindungsgemäße Ventileinrichtung 7 mit den beiden Federelementen 12 und 13 ist darüber hinaus der Ausgleich von Fertigungstoleranzen bzgl. bspw. einer axialen Länge des Zapfens 4 einfach möglich.

Wie der Fig. 2 weiter zu entnehmen ist, ist am Funktionselement 10 ein Stutzen 15 vorgesehen, mit welchem das Funktionselement 10 dicht in einen nicht gezeigten reinseitigen Ablauf des Filtergehäuses einsteckbar ist. Wird somit das erfindungsgemäße Filterelement 2 aus der Filtereinrichtung 1 entnommen, so öffnet die Ventileinrichtung 7 und bewirkt ein Leerlaufen der Rohseite 18, nicht jedoch unbedingt der Reinseite. Dabei bleibt insbesondere festzuhalten, dass der Schiebekolben 11 und das zugehörige erste Federelement 12 als reiner Toleranzausgleich fungieren.

## Patentansprüche

1. Filtereinrichtung (1) zum Filtern einer Flüssigkeit einer Brennkraftmaschine, insbesondere in einem Kraftfahrzeug,
- mit einem Filtergehäuse zur Aufnahme eines Filterelements (2),
- wobei das Filterelement (2) einen axial und exzentrisch abstehenden Zapfen (4) aufweist, der im eingesetzten Zustand in eine Zapfenaufnahme (5) in einem Leerlaufkanal (6) eingesteckt ist,
- wobei im Bereich der Zapfenaufnahme (5) eine Ventileinrichtung (7) vorgesehen ist, die bei vorhandenem Filterelement (2) durch den Zapfen (4) in einen Schließzustand gedrückt ist und den Leerlaufkanal (6) verschließt.
**dadurch gekennzeichnet,**
- **dass** die Zapfenaufnahme (5) und die Ventileinrichtung (7) Bestandteil eines insbesondere aus Kunststoff ausgebildeten Einsatzes (8) sind,
- **dass** der Einsatz (8) über eine O-Ringdichtung (9) flüssigkeitsdicht in den Leerlaufkanal (6) einsetzbar ist, wobei der Einsatz (8) zugleich Bestandteil eines Funktionselementes (10) ist,
- **dass** am Funktionselement (10) ein Stutzen (15) vorgesehen ist, mit welchem das Funktionselement (10) dicht in einen rohseitigen Zulauf oder einen reinseitigen Ablauf des Filtergehäuses einsteckbar ist.

2. Filtereinrichtung nach Anspruch 1,
**dadurch gekennzeichnet,**
**dass** die Ventileinrichtung (7) einen Schiebekolben (11), Federelemente (12,13) und einen Ventilkolben (14) aufweist.

3. Filtereinrichtung nach Anspruch 2,
**dadurch gekennzeichnet,**
**dass** zwei Federelemente (12,13) vorgesehen sind, wovon das erste Federelement (12) zwischen dem Ventilkolben (14) und dem Schiebekolben (11) und das zweite Federelement (13) zwischen dem Ventilkolben (14) und dem Einsatz (8) angeordnet ist.

4. Filtereinrichtung nach Anspruch 3,
**dadurch gekennzeichnet,**
**dass** das zweite Federelement (13) den Ventilkolben (14) in seine Öffnungsstellung vorspannt, wogegen das erste Federelement (12) den Ventilkolben (14) bei eingesetztem Filterelement (2) in seine Schließstellung drückt.

5. Filtereinrichtung nach einem der Ansprüche 2 bis 4,
**dadurch gekennzeichnet,**
**dass** der Schiebekolben (11) bei eingebautem Filterelement (2) mit dem Zapfen (4) des Filterelements (2) in Kontakt steht.

6. Filtereinrichtung nach einem der Ansprüche 1 bis 5,
**dadurch gekennzeichnet,**
**dass** die Filtereinrichtung (1) zum Filtern von Schmieröl oder zum Filtern von Kraftstoff ausgestaltet ist.

## Claims

1. A filter device (1) for filtering a liquid of an internal combustion engine, in particular in a motor vehicle,
- having a filter housing for accommodating a filter element (2),
- wherein the filter element (2) has an axially and eccentrically projecting peg (4), which in the inserted state is put into a peg receptacle (5) in a no-load duct (6),
- wherein a valve device (7) is provided in the region of the peg receptacle (5), which valve device is pressed into a closed state by the peg (4) and closes off the no-load duct (6) when the filter element (2) is present,
**characterised in that**
- the peg receptacle (5) and the valve device (7) are part of an insert (8), which is formed in particular from plastic,
- the insert (8) can be inserted in a liquid-tight manner into the no-load duct (6) by means of an O-ring seal (9), wherein the insert (8) is at the same time part of a functional element (10),
- a connecting piece (15) is provided on the functional element (10), with which the functional element (10) can be inserted in a leakproof manner into an inlet on the untreated side or an outlet on the clean side.

2. The filter device according to Claim 1,
**characterised in that**
the valve device (7) has a sliding piston (11), spring elements (12, 13) and a valve piston (14).

3. The filter device according to Claim 2,
**characterised in that**
two spring elements (12, 13) are provided, of which the first spring element (12) is arranged between the valve piston (14) and the sliding piston (11) and the second spring element (13) is arranged between the valve piston (14) and the insert (8).

4. The filter device according to Claim 3,
**characterised in that**
the second spring element (13) pretensions the valve piston (14) into its open position, whereas the first spring element (12) pushes the valve piston (14) into its closed position when the filter element (2) is inserted.

5. The filter device according to one of Claims 2 to 4,
**characterised in that**
the sliding piston (11) is in contact with the peg (4) of the filter element (2) when the filter element (2) is installed.

6. The filter device according to one of Claims 1 to 5,
**characterised in that**
the filter device (1) is designed to filter lubricating oil or to filter fuel.

## Revendications

1. Dispositif de filtre (1) pour filtrer un liquide d'un moteur à combustion interne, notamment dans un véhicule automobile,
- comportant un logement de filtre pour recevoir un élément de filtre (2),
- dans lequel l'élément de filtre (2) présente un goujon de fixation (4) dépassant axialement et excentriquement, qui est enfiché en l'état inséré dans un réceptacle de goujon (5) dans un canal de ralenti (6),
- dans lequel au niveau du réceptacle de goujon (5) un dispositif de soupape (7) est prévu, qui en présence de l'élément de filtre (2) est pressé par le goujon de fixation (4) dans un état de fermeture et obture le canal de ralenti (6),
**caractérisé en ce que**
- le réceptacle de goujon (5) et le dispositif de soupape (7) sont partie intégrante d'un insert (8) réalisé notamment en plastique,
- l'insert (8) peut être inséré par l'intermédiaire d'un joint d'étanchéité torique (9) de manière étanche aux liquides dans le canal de ralenti (6), dans lequel l'insert (8) est simultanément partie intégrante d'un élément fonctionnel (10),
- sur l'élément fonctionnel (10) un embout (15) est prévu, avec lequel l'élément fonctionnel (10) peut être enfiché de manière étanche dans une condition d'amenée du côté du tuyau ou une conduite d'évacuation du logement de filtre du côté purifié.

2. Dispositif de filtre selon la revendication 1,
**caractérisé en ce que**
le dispositif de soupape (7) présente un piston coulissant (11), des éléments de ressort (12, 13) et un piston de soupape (14).

3. Dispositif de filtre selon la revendication 2,
**caractérisé en ce que**
deux éléments de ressort (12, 13) sont prévus, desquels le premier élément de ressort (12) est disposé entre le piston de soupape (14) et le piston coulissant (11) et le deuxième élément de ressort (13) est disposé entre le piston de soupape (14) et l'insert (8).

4. Dispositif de filtre selon la revendication 3,
**caractérisé en ce que**
le deuxième élément de ressort (13) précontraint le piston de soupape (14) dans sa position d'ouverture, tandis que le premier élément de ressort (12) presse le piston de soupape (14) quand l'élément de filtre (2) est inséré dans sa position de fermeture.

5. Dispositif de filtre selon une des revendications 2 à 4,
**caractérisé en ce que**
le piston coulissant (11) est en contact avec l'élément de filtre (2) monté par le goujon de fixation (4) de l'élément de filtre (2).

6. Dispositif de filtre selon une des revendications 1 à 5,
**caractérisé en ce que**
le dispositif de filtre (1) est conçu pour filtrer de l'huile lubrifiante ou pour filtrer du carburant.
